# EUROPEAN PATENT SPECIFICATION

(11) **EP 4 159 605 B1**
(45) Date of publication and mention of the grant of the patent: **14.05.2025**
(21) Application number: 22197634.3
(22) Date of filing: 26.09.2022
(51) Int. Cl.: B62J 43/16, B62J 43/20

(54) **ELECTRIC MOTORCYCLE**
ELEKTRISCHES MOTORRAD
MOTOCYCLETTE ÉLECTRIQUE

(30) Priority: 29.09.2021 IT 202100024956
(43) Date of publication of application: 05.04.2023
(73) Proprietor: Engines Engineering S.r.l., 40055 Castenaso (Bologna) (IT)
(72) Inventor: ZELIOLI, Enrico, Seregno (Monza Brianza) (IT)
(74) Representative: Puggioli, Tommaso

(56) References cited:
- DE-A1- 102019 004 457
- JP-A- H05 105 160

## Description

This invention relates to an electric motorcycle.

It is well known that one of the significant limitations of electric vehicles, and in particular of electric motorcycles given their dimensions, is the autonomy due to the low specific energy value of the RESS's (*Rechargeable Energy Storage Systems*) and the lengthy times required for their recharging.

Schematically, the substantially known RESS's comprise accumulators, for example electrochemical accumulators, an electronic control circuitry and further various electrical components.

The RESS's are referred to below simply with the term "battery".

The batteries are usually positioned in suitable casings and, if they are faulty or discharged, must be replaced or recharged to allow the motorcycle to operate.

The batteries may be an integral part of the vehicle, requiring the complete dismantling of the vehicle if they must be replaced.

According to other prior art solutions, the removal of the batteries, despite their considerable size and weight, occurs generally by lifting them upwards in such a way as to extract them from the body of the motorcycle. Patent document JPH05105160 illustrates, for example, a motorcycle in which all the batteries are positioned in a single casing, located inside the motorcycle, and they can be removed by lifting the casing itself.

According to the solution described in document DE102019004457, which shows the features of the preamble of claim 1, in order to remove the batteries from the motorcycle, the batteries must be turned and lifted.

The operations for removing and replacing the batteries are therefore very complex and onerous both in terms of time and operations to be carried out by the operators for these operations.

These limitations are felt even more when the electric motorcycle is used in sports competitions on a track.

In effect, the limited quantity of energy available on board and the impossibility of easily replacing the batteries results in a competition which is too limited in terms of time and not very satisfactory.

In general, the batteries and the respective casings are inserted in respective housings provided in the motorcycle with the sole purpose of supplying energy to the electric motor making the motorcycle heavier and leaving the entire structural function to the frame.

The need is felt of producing electric motorcycles which allow an easier removal/replacing of the batteries, facilitating the operations by the operators.

The aim of the invention is to satisfy at least the above-mentioned need by providing a motorcycle for which the removal/replacement of the batteries is simpler than for prior art solutions.

At least said aim is achieved by the invention as characterised in the independent claim.

The dependent claims correspond to possible different embodiments of the invention.

According to an aspect, the invention relates to an electric motorcycle comprising a frame, an electric motor supported by the frame, at least a first battery and a second battery for powering the electric motor.

According to an aspect, the motor is supported by the frame and is fixed preferably by two plates located at the sides of the motor.

According to an aspect, the electric motorcycle comprises a shock absorber, a swingarm which define a rear end of the motorcycle.

According to an aspect, the electric motorcycle comprises a steering system and a front suspension which define a front end of the motorcycle.

According to an aspect, the frame connects the front end and the rear end of the motorcycle.

According to an aspect, the swingarm may be connected to the plates of the motor or directly to the frame.

According to an aspect, the frame has a main direction of extension.

According to an example, the frame comprises a lattice structure.

According to an example, the frame is an aluminium casting but could also be made with a structure made of steel pipes.

The lattice may be made, for example, of steel (in the case of a road motorcycle) or of carbon steel (in the case of a racing motorcycle).

According to an aspect, the frame remains to the side of the batteries.

According to an aspect, the first battery is housed inside a first casing.

According to an aspect, the second battery is housed inside a second casing.

According to an aspect, the first casing is positioned on the side opposite the second casing relative to the frame.

In other words, the frame is interposed between the first and second casing.

The frame has a first side and a second side.

According to an aspect, the first casing and the second casing are fixed laterally to the frame, that is to say, the first casing is fixed to the first side of the frame and the second casing is fixed to the second side of the frame.

According to an aspect, the frame has a twofold function both as a structural skeleton for the motorcycle and for supporting the casings containing the batteries.

According to an aspect, the casings are made in such a way as to have structural features which contribute to increasing, schematically, the rigidity of the frame.

According to an aspect, the first and the second battery are symmetrical relative to the frame.

According to an aspect, the batteries are equipped with independent electrical connectors for connection to the electric systems of the motorcycle, both at high and low voltage, and can be connected to the electrical system in series or in parallel.

According to an aspect, the first casing and the second casing are symmetrical relative to the frame.

According to an aspect, the first casing comprises a first structural element.

According to an aspect, the first casing is fixed to the frame by means of the first structural element.

According to an aspect, the second casing comprises a second structural element.

According to an aspect, the second casing is fixed to the frame by means of the second structural element.

According to an aspect, each structural element has a plurality of through holes.

According to the invention, the motorcycle comprises a load-bearing structure comprising the frame, the first and the second structural element.

In other words, the frame is completed by the two casings which not only contain the batteries but also have a structural function.

According to an aspect, the casings and the batteries themselves participate in the load-bearing structure of the motorcycle.

According to an aspect, the structural elements and the casings contribute to the total rigidity of the load-bearing structure.

According to an aspect, the structural elements and the casings contribute to the total strength of the load-bearing structure.

Advantageously, the presence of a first and a second structural element fixed to the frame allows the rigidity of the load-bearing structure of the motorcycle to be increased.

According to an example, the structural elements are made of steel or aluminium, for example with a lattice structure, and the shells are screwed on.

According to an example, the structural elements are made of carbon steel and glued to the shells.

According to an aspect, the load-bearing structure of the motorcycle can be disassembled and comprises a frame (positioned centrally) and the casings which carry the batteries are positioned at the sides of the frame.

According to an aspect, the first casing comprises a first shell in which the first battery is positioned.

According to an aspect, the first shell is joined to the first structural element, for example, by welding, gluing or coupling by screws.

According to an aspect, the second casing comprises a second shell in which the second battery is positioned.

According to an aspect, the second shell is joined to the second structural element, for example, by welding, gluing or coupling by screws.

According to an aspect, each shell may have at least one through hole.

Advantageously, the presence of a hole allows the shell to be attached to the frame.

According to an aspect, each shell comprises a first and a second half-shell; each shell can be disassembled into two parts.

The first half-shell is welded, glued or coupled by screws to the first structural element.

The two half-shells are, for example, glued or coupled to each other by screws.

Advantageously, the presence of two half-shells coupled in a reversible manner (by screws) means the casings can be opened, making it possible to access the batteries.

Advantageously, having access to the batteries allows any malfunctioning cells to be replaced, allowing the operations for repairing the batteries to be carried out.

The casings may be made of different materials, for example: steel, aluminium alloy, carbon steel.

According to an aspect, the casings may be made with different technologies such as, for example, die-casting, 3D printer or forging.

According to an aspect, the motorcycle comprises coupling means for fixing the first and second casings to the frame.

According to an aspect, the coupling means comprise first engagement means and second engagement means configured to engage with each other.

According to an aspect, the frame comprises the first engagement means.

According to an aspect, the first engagement means comprise a plurality of tubes, that is to say, elements which protrude laterally from the frame. According to an example, the tubes are cylindrical elements.

According to an example, the tubes are polyhedral elements.

According to an aspect, the tubes pass through at least one hole in the casing.

The second engagement means then allow the structural element and, consequently, the casing to be fixed to the frame.

According to an aspect, the tubes are positioned symmetrically on the sides of the frame.

According to an example, the tubes are hollow cylindrical elements equipped with threading inside them; in this case, the second engagement means comprise a plurality of screws configured to be inserted inside the tubes.

The screws, engaged in the tubes, fix the two structural elements on the frame.

According to an example, the tubes are stud bolts, that is to say, solid cylindrical or polyhedral elements equipped with externally threaded portions; in this case, the second engagement means comprise nuts, which, screwing onto the stud bolts, fix the two structural elements to the frame.

For example, the casings by means of the structural elements may be fixed to the frame by five tubes on each side.

Advantageously, the operation for replacing the batteries is very fast; in effect, after disconnecting the connectors of the batteries it is sufficient to unscrew a small number of screws or nuts to replace the batteries and have the motorcycle driving again.

Advantageously, the fixing made using screws or nuts makes the batteries rapidly interchangeable, reducing the stoppage time of the motorcycle and allowing the passage from the minimum energy state to the maximum energy state in just a few seconds.

Advantageously, in the case of racing motorcycles, the coordinated intervention of mechanics operating on the motorcycle configured in this way allows the replacement of the batteries with a very short stopping time of the motorcycle, without excessive increases in costs and allowing, for example, the duration of the competition to be doubled.

According to an aspect, the first engagement means extend from the frame horizontally.

Advantageously, the removal/replacement of the casings from the frame occurs laterally, preferably in a horizontal direction.

Advantageously, removing/replacing the batteries laterally simplifies the operations for technicians, avoiding lifting and making the weight of the battery easier to handle.

According to the invention, the frame comprises at least a first supporting element, for the first casing, which protrudes laterally from the frame.

According to the invention, the frame comprises at least a second supporting element, for the second casing, which extends laterally from the frame on the opposite side relative to the first supporting element.

According to an aspect, the first casing is removable from the frame by a first translational movement along the first supporting element and the second casing is removable from the frame by means of a second translational movement along the second supporting element.

Advantageously, removing the first and second casings with a translational movement simplifies the battery removal operations for the operators, avoiding the lifting of loads and any interference with parts of the motorcycle.

According to an aspect, the first supporting element and the second supporting element can be symmetrical relative to the frame.

According to an aspect, the supporting elements pass through at least one through hole of each structural element and/or the through hole present on the shell.

Advantageously, the supporting elements inserted in the through holes of the structural elements and/or of the shells allow the casings to be attached to the frame.

According to an example, in the case of shells made of carbon steel, the through holes are delimited by aluminium bushes embedded in the carbon steel.

According to an example, the through holes are holes made in the structural element.

Advantageously, the presence of supporting elements, in particular in the form of stud bolts, simplifies the approach of the casings which are attached to the frame.

In that what way, the casings do not risk striking the other parts of the motorcycle and/or damaging, amongst others, the engagement means.

Advantageously, the supporting elements act as a guide, facilitating the operations for removal/replacement of the batteries.

According to an aspect, the first engagement means comprise the first and second supporting elements.

According to an example, the supporting means comprise the tubes, that is to say, the tubes act both as supporting means and engagement means.

According to an example, the first and second supporting elements are horizontal.

In this case, the first and the second translation movements occur along a horizontal direction.

According to another example, the first and the second supporting element are oblique; in other words, they are inclined in such a way as to form an angle with a longitudinal plane along which the motorcycle extends.

In this case, the first and the second translational movements occur along an oblique direction, that is to say, inclined relative to the horizontal direction.

According to an aspect, the first casing delimits with the frame a first gap.

According to an aspect, the second casing delimits with the frame a second gap.

According to an aspect, the motorcycle comprises a passage duct for air which comprises the first and second gaps.

In other words, the frame coupled to the two casings makes it possible to have, between the two casings, a gap along a plane along which the motorcycle extends longitudinally.

Advantageously, when the motorcycle moves along a flow of air flows through the passage duct between the two casings, cooling the batteries uniformly.

Advantageously, thanks to the presence of the gaps the batteries can be cooled by natural convection.

Advantageously, the presence of the passage duct for air between the casings allows the batteries to be struck by the air both on the inner and outer surfaces, thus doubling the heat exchange.

According to an example, the battery may be cooled by forced air convection and/or by means of a cooling liquid.

According to an example, the motorcycle may comprise a cooling device positioned between the first and the second casings.

The features of the invention are more apparent from the detailed description which follows, with reference to the accompanying drawings which illustrate a preferred embodiment of the invention purely by way of non-limiting example, and in which:
- Figure 1 is a schematic side view of an electric motorcycle according to the invention;
- Figure 2 is an exploded schematic perspective view of an electric motorcycle according to the invention;
- Figure 3 is an schematic perspective view of a detail of an electric motorcycle according to the invention;
- Figure 4 is an exploded schematic perspective view of the detail of Figure 3;
- Figure 5 is a schematic top view of a detail of an electric motorcycle according to the invention;
- Figure 6 is a schematic front view of a detail of an electric motorcycle according to the invention.

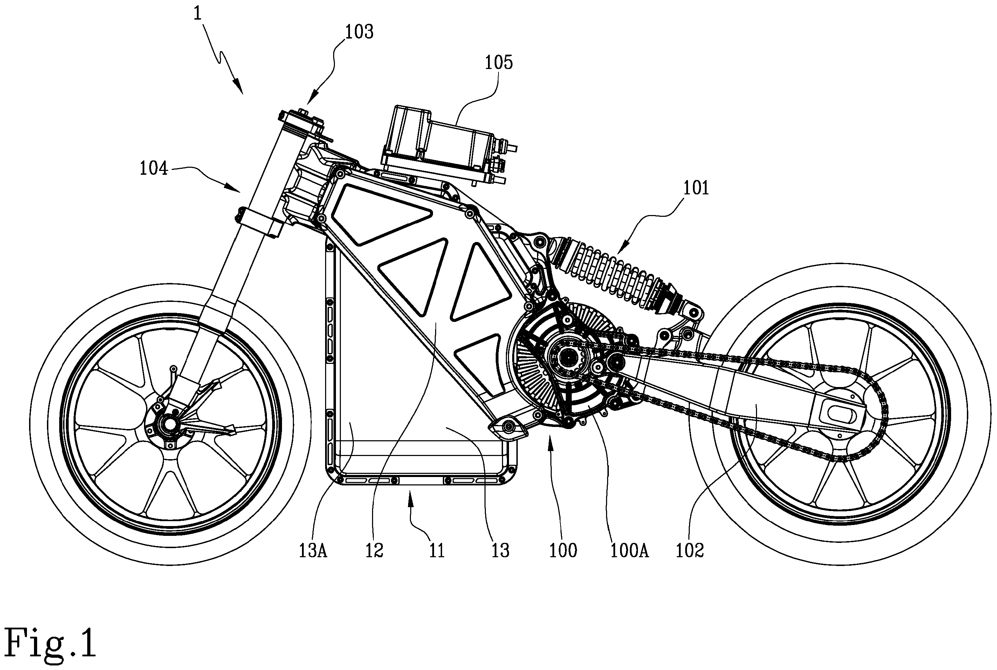

With reference to the accompanying drawings, and in particular Figure 1, the numeral 1 denotes an electric motorcycle according to the invention.

The motorcycle 1 is described in detail solely for the parts necessary for the understanding of the invention.

The motorcycle 1 comprises a frame 50 with a main longitudinal axis of extension a50.

The frame 50 has a first side 51 and a second side 52.

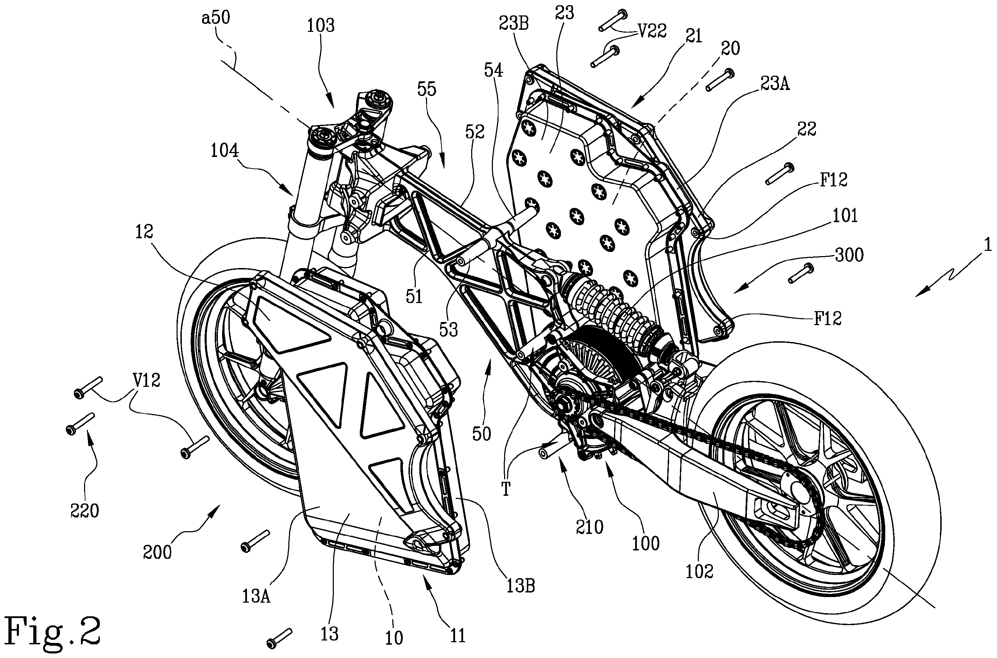

According to an embodiment, illustrated for example in Figure 2, the frame 50 is in the form of a lattice, that is to say, it comprises a lattice structure 55.

According to an embodiment, the frame 50 is cast in aluminium.

The motorcycle 1 comprises an electric motor 100 supported by the frame 50.

The motor 100 is fixed to the frame 50 by a first fixing plate 100A and a second fixing plate (not illustrated) positioned at the sides of the motor 100.

The first plate 100A and the second plate are preferably attached, respectively, to the first side 51 and to the second side 52 of the frame 50.

Advantageously, the plates can contribute to imparting rigidity to the frame 50.

The motorcycle 1 comprises a shock absorber 101, a swingarm 102 which define a rear end of the motorcycle 1.

The motorcycle 1 comprises a steering system 103 and a front suspension 104 which define a front end of the motorcycle 1.

The frame 50 connects the shock absorber 101 and the swingarm 102 to the steering system 103 and to the front suspension 104.

According to an embodiment illustrated in Figure 1, the swingarm 102 is hinged on the plates for fixing the motor.

According to an embodiment, the swingarm 102 may be hinged on the frame 50.

The motorcycle 1 comprises a motor control unit (inverter) 105 which may be located, for example, in a central position on the frame 50.

The motorcycle 1 comprises at least a first battery 10 and a second battery 20 which power the motor 100.

The battery 10 and the battery 20 are connected to the motor 100 by means of the engine control unit 105.

According to an embodiment, the battery 10 is symmetrical to the battery 20 relative to the frame 50.

The battery 10 and the battery 20 are equipped with independent electrical connectors for connection to the electric systems of the motorcycle, both at high and low voltage, and can be connected to the electrical system in series or in parallel.

The battery 10 is housed inside a first casing 11.

The battery 20 is housed inside a second casing 21.

The casing 11 is located on the opposite side of the frame 50 to the casing 21.

In other words, the frame 50 is interposed between the casing 11 and the casing 21.

The casing 11 is fixed to the side 51 and the casing 21 is fixed to the side 52. In other words, the casing 11 and the casing 21 are fixed laterally to the frame 50.

According to an embodiment, the casing 11 and the casing 21 are symmetrical relative to the frame 50.

The casings 11, 21 may be made of different materials such as, for example: sheet of steel or aluminium, carbon, casting of aluminium alloy, fibreglass.

The casing 11 comprises a first structural element 12.

The casing 11 is fixed to the side 51 of the frame 50 by means of the first element 12.

The casing 21 comprises a second structural element 22.

The casing 21 is fixed to the side 52 of the frame 50 by means of the second element 22.

According to an embodiment, the shape of the element 12 and 22 follows that of the frame 50, that is to say, it has a shape, in the longitudinal plane of extension, which can be substantially superposed on that of the frame 50.

According to an embodiment, the shape of the element 12 and 22 comprises a reticular-like structure. The structural element 12 and the structural element 22 have, respectively, a plurality of through holes F12.

According to an embodiment, the structural elements 12 and 22 are made of carbon steel and glued to the shells 13 and 23.

According to an embodiment, the structural elements 12, 22 are made of aluminium or steel lattices and, for example, fixed by screws to the shells 13 and 23.

The casing 11 comprises a first shell 13, in which the battery 10 is positioned.

The first shell 13 has at least one through hole F13 for attaching the shell 13 to the frame.

The first shell 13 is joined to the first element 12.

According to an embodiment, the first shell 13 is joined to the first element 12 by welding.

According to an embodiment, the first shell 13 is joined to the first element 12 by gluing.

According to an embodiment, the first shell 13 is joined to the first element 12 by screws V12.

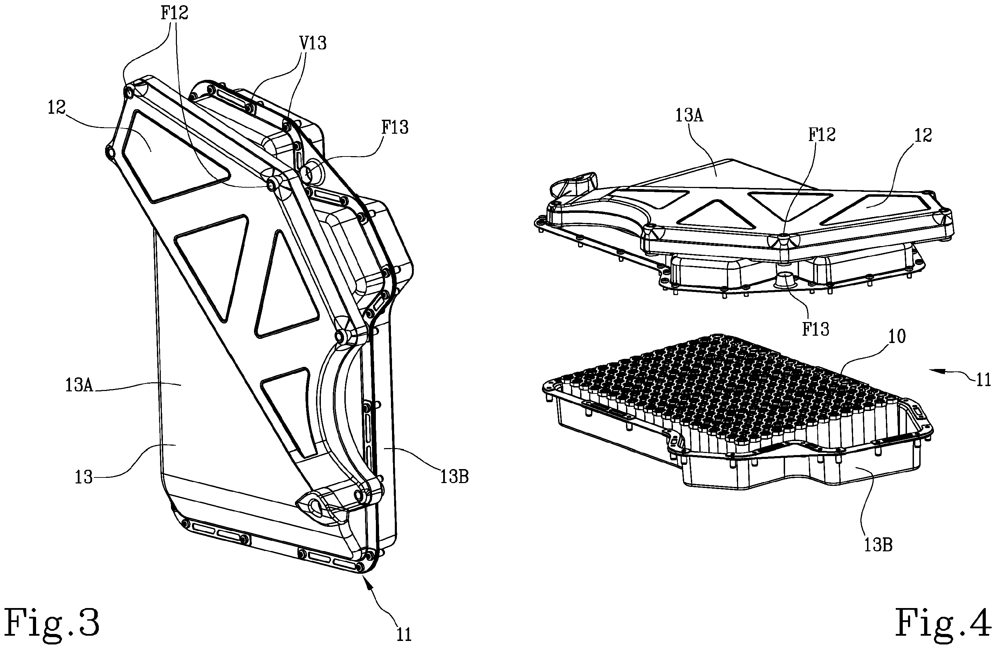

According to an embodiment, illustrated for example in Figures 3 and 4, the shell 13 comprises a first half-shell 13A and a second half-shell 13B.

The half-shell 13A may be glued or welded to the first element 12.

According to an embodiment, the half-shell 13A is glued to the second half-shell 13B.

According to an embodiment, the half-shell 13A is coupled to the second half-shell 13B for example by screws V13.

Advantageously, making the shell 13 with two separable half-shells allows the casing 11 to be opened and to intervene on the battery 10 in the event of a malfunction and any defective cells to be replaced.

The casing 21 comprises a second shell 23 in which the battery 20 is positioned.

The second shell 23 has at least one through hole F23 for attaching the shell 23 to the frame.

The second shell 23 is joined to the second element 22.

According to an embodiment, the second shell 23 is joined to the element 22 by welding.

According to an embodiment, the second shell 23 is joined to the element 22 by gluing.

According to an embodiment, the second shell 23 is joined to the element 22 by screws V22.

According to an embodiment, the shell 23 comprises a first half-shell 23A and a second half-shell 23B.

The half-shell 23A may be glued or welded to the first element 22.

According to an embodiment, the half-shell 23A is glued to the half-shell 23B.

According to an embodiment, the half-shell 23A is coupled to the half-shell 23B for example by screws V23.

Advantageously, making the shell 23 with two separable half-shells allows the casing 21 to be opened and to intervene on the battery 20 in the event of a malfunction and any defective cells to be replaced.

According to a preferred embodiment, the motorcycle 1 comprises: the frame 50;
the first half-shell 13A, 23A (in which the RESS's are housed and mounted);
the second half-shell 13B, 23B coupled with or glued to the first half-shell 13A, 23A and the structural element 12, 22 fixed to the second half-shell 23B.

The motorcycle 1 comprises means 200 for coupling the casings 11, 21 to the frame 50.

Advantageously, the coupling means 200 allow the structural elements 12, 22 and the casings 11 and 21 to be coupled and fixed to the frame 50, providing structural continuity.

The means 200 comprise first engagement means 210 and second engagement means 220.

The means 210 and 220 are configured to engage with each other.

The frame 50 comprises, for example, the engagement means 210.

According to an embodiment illustrated in Figure 2, the means 210 comprise a multiplicity of hollow tubes T, cylindrical or polyhedral elements, which are threaded internally and/or have threaded inserts inside them and the means 220 are screws V12, V22 configured to engage the turrets T passing through the plurality of holes F12, F22, respectively.

According to an embodiment, the means 210 comprise a multiplicity of tubes T, cylindrical or polyhedral solid elements shaped as studs, comprising externally threaded shanks, and the means 220 comprise nuts suitably configured for screwing to the tubes T.

In general, the tubes T are positioned on both sides 51, 52; preferably, the tubes T on the sides 51, 52 are symmetrical relative to the frame 50.

According to an embodiment, the tubes T project from the frame 50 horizontally.

Advantageously, the horizontal tubes T allow the casings containing the batteries to be mounted and removed laterally, extracting them in a horizontal direction, facilitating the removal and replacement operations for the technicians.

In practice, when the batteries 10, 20 are mounted on the frame 50, the tubes T are inserted in the holes F12, F22 of the structural elements 12, 22.

The structural elements 12, 22 are fixed to the frame 50 by the screws V12, V22.

The frame 50 comprises at least a first element 53 for supporting the first casing 11 and a second element 54 for supporting the second casing 21.

The element 53 projects laterally from the frame 50 from the first side 51.

The element 54 projects laterally from the frame 50 from the second side 52 on the opposite side relative to the element 53.

The first casing 11 is removable from said frame 50 by a first translational movement along the first supporting element 53.

The second casing 21 is removable from said frame 50 by a second translational movement along the first supporting element 54.According to an embodiment, the element 53 passes through at least one hole F12 in the structural element 12.

According to an embodiment, the element 53 passes through at least one hole F12 in the structural element 12 and the hole F13 in the shell 13.

According to an embodiment, the element 53 passes through the hole F13 and is in contact with the structural element 12.

According to an embodiment, the element 54 passes through at least one hole F22 in the structural element 22.

According to an embodiment, the element 54 passes through at least one hole F22 in the structural element 22 and the hole F23 in the shell 23.

According to an embodiment, the element 54 passes through the hole F23 and is in contact with the structural element 22.

Advantageously, the supporting elements 53, 54 make it possible to attach the casings 11 and 21 to the frame 50 facilitating the fixing operations for the technicians.

In practice, when the batteries 10, 20 are mounted on the frame 50, the elements 53, 54 are inserted in the holes F13, F23 of the shells 13, 23.

The shells 13, 23 are preferably locked to the frame 50 by the structural elements 12, 22 which are fixed to the frame 50 by the screws V12, V22.

According to an embodiment, the means 210 comprise the elements 53 and 54.

In other words, according to an embodiment, the tubes T act both as supporting elements 53,54 and as means for coupling the casings themselves.

According to an embodiment, illustrated in Figure 2, the elements 53 and 54 extend laterally from the frame 50 in a substantially horizontal manner.

According to an embodiment, the elements 53 and 54 extend laterally from the frame in an oblique fashion relative to the longitudinal plane of extension of the motorcycle.

Advantageously, the supporting elements act as a guide during the step of moving the casings (containing the batteries) towards the frame.

In that way, the casings do not impact with other components of the motorcycle, for example the tubes, preventing their damage and/or damage to the motorcycle.

According to a preferred embodiment, the casings do not have the holes F13, F23 and the elements 53, 54 are stud bolts which directly pass through the holes F12, F22.

In this case, the casings 11, 21 are held in position by the tubes T in the form of stud bolts and then fixed with the corresponding nuts.

The motorcycle 1 comprises a load-bearing structure 300 comprising at least the frame 50, the first element 12 and the second element 22.

According to an embodiment, the load-bearing structure 300 comprises the frame 50, the first element 12, the second element 22, the casing 11, the casing 21 and the plates for fixing the motor.

Advantageously, coupling the structural elements 12, 22 and the casings 11, 21 with the frame 50 guarantees the rigidity necessary for the load-bearing structure 300 of the motorcycle.

Advantageously, using a shape of the structural element 12, 22, such as that of the frame 50 allows further rigidity to be given to the frame.

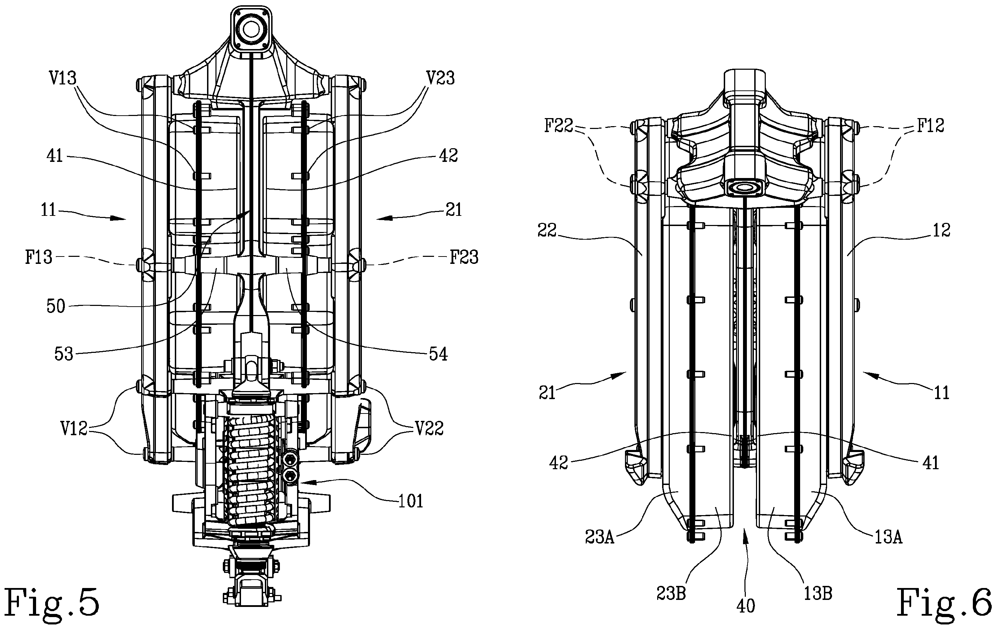

According to an embodiment, illustrated for example in Figure 6, the motorcycle 1 comprises a passage duct 40 for cooling air.

The duct 40 extends mainly along the longitudinal plane of extension of the motorcycle.

The duct 40 for the passage of the cooling air comprises a first gap 41 and a second gap 42.

Preferably, the gaps 41, 42 are in fluid communication.

As, for example, illustrated in Figure 5, the casing 11 delimits with the frame 50 the first gap 41 and the casing 21 delimits with the frame 50 the second gap 42.

Advantageously, when the motorcycle is moving the gaps and the passage duct allow the casings to be struck by the air over most of their surface, allowing the batteries to be cooled uniformly.

According to an embodiment, the electric motorcycle comprises a cooling device, for example a radiator or an electric fan, preferably positioned at the casings 11 and 21.

The batteries 10 and 20 may therefore be cooled by natural convection or by forced air convection or by means of a cooling liquid.

## Claims

1. A motorcycle comprising:
a frame (50),
an electric motor (100) supported by the frame (50),
at least a first battery (10) and a second battery (20) for powering the electric motor (100),
said first and second battery (10, 20) being housed respectively inside a first casing (11) and a second casing (21), said first casing (11) is positioned on the opposite side to the second casing (21) relative to the frame (50), said frame (50) being interposed between the first and second casings (11, 21), said electric motorcycle comprising coupling means (200) for fixing said first and second casings (11, 21) to said frame (50),
said frame (50) comprising at least a first supporting element (53) for said first casing (11) extending laterally from said frame (50) and at least a second supporting element (54) for said second casing (21), said second supporting element (54) extending laterally from said frame (50) on the opposite side with respect to said first supporting element,
**characterised by**
said first casing (11) comprising a first structural element (12) and the second casing (21) comprising a second structural element (22), said first casing (11) being fixed to said frame (50) by the first structural element (12) and said second casing (21) being fixed to said frame (50) by the second structural element (22), said electric motorcycle comprising a load-bearing structure (300) comprising said frame (50) and said first and second structural elements (12, 22).

2. The electric motorcycle according to claim 1, wherein said first casing (11) is removable from said frame (50) by a first translational movement along the first supporting element (53) and said second casing (21) is removable from said frame (50) by a second translational movement along the second supporting element (54).

3. The electric motorcycle according to claim 1 or 2, wherein said first casing (11) and said second casing (21) are fixed laterally to the frame (50).

4. The electric motorcycle according to any of the preceding claims, wherein the coupling means (200) comprise first engagement means (210) and second engagement means (220), said first and second engagement means (210, 220) being configured to engage with each other, said frame (50) comprising said first engagement means (210).

5. The electric motorcycle according to claim 4, wherein said first engagement means (210) comprise said first and second supporting elements (53, 54).

6. The electric motorcycle according to any one of the preceding claims, wherein said first and second supporting elements (53, 54) are horizontal.

7. The electric motorcycle according to any one of the preceding claims, wherein said first casing (11) comprises a first shell (13) and the second casing (21) comprises a second shell (23), said first battery (10) being positioned in said first shell (13) and said second battery (20) being positioned in said second shell (23).

8. The electric motorcycle according to any one of the preceding claims, wherein said first shell (13) is joined to said first structural element (12) and said second shell (23) is joined to said second structural element (22).

9. The electric motorcycle according to claim 8, wherein the first shell (13) and the second shell (23) are joined, respectively, to the first structural element (12) and to the second structural element (22) by welding or gluing.

10. The electric motorcycle according to any one of the preceding claims, wherein the frame (50) comprises a lattice structure.

11. The electric motorcycle according to any one of the preceding claims, wherein said first casing (11) delimits with said frame (50) a first gap (41) and said second casing (21) delimits with said frame (50) a second gap (42), said electric motorcycle comprising a duct (40) for passage of cooling air, said passage duct (40) comprising said first and second gap (41, 42).

12. The electric motorcycle according to any one of the preceding claims, wherein said first battery (10) and second battery (20) are symmetrical with respect to said frame (50).

13. The electric motorcycle according to any one of the preceding claims, wherein said first casing (11) and second casing (21) are symmetrical relative to said frame (50).

## Patentansprüche

1. Motorrad, umfassend:
einen Rahmen (50),
einen Elektromotor (100), der vom Rahmen (50) gestützt wird,
mindestens eine erste Batterie (10) und eine zweite Batterie (20) für den Antrieb des Elektromotors (100),
wobei die erste und die zweite Batterie (10, 20) jeweils in einem ersten Gehäuse (11) und einem zweiten Gehäuse (21) untergebracht sind, wobei das erste Gehäuse (11) auf der entgegengesetzten Seite zum zweiten Gehäuse (21) relativ zum Rahmen (50) positioniert ist, wobei der Rahmen (50) zwischen dem ersten und dem zweiten Gehäuse (11, 21) eingesetzt ist, wobei das elektrische Motorrad Kopplungsmittel (200) zum Fixieren des ersten und zweiten Gehäuses (11, 21) am Rahmen (50) umfasst,
wobei der Rahmen (50) mindestens ein erstes Stützelement (53) für das erste Gehäuse (11), das sich seitlich vom Rahmen (50) erstreckt, und mindestens ein zweites Stützelement (54) für das zweite Gehäuse (21) umfasst, wobei sich das zweite Stützelement (54) seitlich vom Rahmen (50) auf der entgegengesetzten Seite in Bezug auf das erste Stützelement erstreckt,
**dadurch gekennzeichnet, dass** das erste Gehäuse (11) ein erstes tragendes Element (12) umfasst und das zweite Gehäuse (21) ein zweites tragendes Element (22) umfasst, wobei das erste Gehäuse (11) am Rahmen (50) durch das erste tragende Element (12) fixiert ist und das zweite Gehäuse (21) am Rahmen (50) durch das zweite tragende Element (22) fixiert ist, wobei das elektrische Motorrad eine lasttragende Struktur (300) umfasst, umfassend den Rahmen (50) und das erste und das zweite tragende Element (12, 22).

2. Elektrisches Motorrad nach Anspruch 1, wobei das erste Gehäuse (11) vom Rahmen (50) durch eine erste translatorische Bewegung entlang des ersten Stützelements (53) abnehmbar ist und das zweite Gehäuse (21) vom Rahmen (50) durch eine zweite translatorische Bewegung entlang des zweiten Stützelements (54) abnehmbar ist.

3. Elektrisches Motorrad nach Anspruch 1 oder 2, wobei das erste Gehäuse (11) und das zweite Gehäuse (21) seitlich am Rahmen (50) fixiert sind.

4. Elektrisches Motorrad nach einem der vorhergehenden Ansprüche, wobei die Kopplungsmittel (200) erste Eingriffsmittel (210) und zweite Eingriffsmittel (220) umfassen, wobei die ersten und die zweiten Eingriffsmittel (210, 220) ausgelegt sind, um ineinander zu greifen, wobei der Rahmen (50) die ersten Eingriffsmittel (210) umfasst.

5. Elektrisches Motorrad nach Anspruch 4, wobei die ersten Eingriffsmittel (210) das erste und das zweite Stützelement (53, 54) umfassen.

6. Elektrisches Motorrad nach einem der vorhergehenden Ansprüche, wobei das erste und das zweite Stützelement (53, 54) horizontal sind.

7. Elektrisches Motorrad nach einem der vorhergehenden Ansprüche, wobei das erste Gehäuse (11) eine erste Hülle (13) umfasst und das zweite Gehäuse (21) eine zweite Hülle (23) umfasst und die erste Batterie (10) in der ersten Hülle (13) positioniert ist und die zweite Batterie (20) in der zweiten Hülle (23) positioniert ist.

8. Elektrisches Motorrad nach einem der vorhergehenden Ansprüche, wobei die erste Hülle (13) mit dem ersten tragenden Element (12) zusammengefügt ist und die zweite Hülle (23) mit dem zweiten tragenden Element (22) zusammengefügt ist.

9. Elektrisches Motorrad nach Anspruch 8, wobei die erste Hülle (13) und die zweite Hülle (23) jeweils mit dem ersten tragenden Element (12) und dem zweiten tragenden Element (22) durch Schweißen oder Kleben zusammengefügt sind.

10. Elektrisches Motorrad nach einem der vorhergehenden Ansprüche, wobei der Rahmen (50) eine Gitterwerkstruktur umfasst.

11. Elektrisches Motorrad nach einem der vorhergehenden Ansprüche, wobei das erste Gehäuse (11) mit dem Rahmen (50) einen ersten Spalt (41) begrenzt und das zweite Gehäuse (21) mit dem Rahmen (50) einen zweiten Spalt (42) begrenzt, wobei das elektrische Motorrad eine Leitung (40) für das Durchströmen von Kühlungsluft umfasst, wobei die Durchströmungsleitung (40) den ersten und den zweiten Spalt (41, 42) umfasst.

12. Elektrisches Motorrad nach einem der vorhergehenden Ansprüche, wobei die erste Batterie (10) und die zweite Batterie (20) in Bezug auf den Rahmen (50) symmetrisch sind.

13. Elektrisches Motorrad nach einem der vorhergehenden Ansprüche, wobei das erste Gehäuse (11) und das zweite Gehäuse (21) relativ zum Rahmen (50) symmetrisch sind.

## Revendications

1. Motocyclette, comprenant :
un cadre (50),
un moteur électrique (100) supporté par le cadre (50),
au moins une première batterie (10) et une seconde batterie (20) pour alimenter le moteur électrique (100),
lesdites première et seconde batteries (10, 20) étant logées respectivement à l'intérieur d'un premier boîtier (11) et d'un second boîtier (21), ledit premier boîtier (11) est positionné du côté opposé au second boîtier (21) par rapport au cadre (50), ledit cadre (50) étant interposé entre les premier et second boîtiers (11, 21), ladite motocyclette électrique comprenant des moyens d'accouplement (200) pour fixer lesdits premier et second boîtiers (11, 21) audit cadre (50),
ledit cadre (50) comprenant au moins un premier élément de support (53) pour ledit premier boîtier (11) s'étendant latéralement à partir dudit cadre (50) et au moins un second élément de support (54) pour ledit second boîtier (21), ledit second élément de support (54) s'étendant latéralement à partir dudit cadre (50) sur le côté opposé par rapport audit premier élément de support,
**caractérisé en ce que** ledit premier boîtier (11) comprend un premier élément structurel (12) et le second boîtier (21) comprend un second élément structurel (22), ledit premier boîtier (11) étant fixé audit cadre (50) par le premier élément structurel (12) et ledit second boîtier (21) étant fixé audit cadre (50) par le second élément structurel (22), ladite motocyclette électrique comprenant une structure porteuse (300) comprenant ledit cadre (50) et lesdits premier et second éléments structurels (12, 22).

2. Motocyclette électrique selon la revendication 1, dans laquelle ledit premier boîtier (11) peut être retiré dudit cadre (50) par un premier mouvement de translation le long du premier élément de support (53) et ledit second boîtier (21) peut être retiré dudit cadre (50) par un second mouvement de translation le long du second élément de support (54).

3. Motocyclette électrique selon la revendication 1 ou 2, dans laquelle ledit premier boîtier (11) et ledit second boîtier (21) sont fixés latéralement au cadre (50).

4. Motocyclette électrique selon l'une quelconque des revendications précédentes, dans laquelle les moyens d'accouplement (200) comprennent des premiers moyens d'engagement (210) et des seconds moyens d'engagement (220), lesdits premiers et seconds moyens d'engagement (210, 220) étant configurés pour s'engager l'un avec l'autre, ledit cadre (50) comprenant lesdits premiers moyens d'engagement (210).

5. Motocyclette électrique selon la revendication 4, dans laquelle lesdits premiers moyens d'engagement (210) comprennent lesdits premier et second éléments de support (53, 54).

6. Motocyclette électrique selon l'une quelconque des revendications précédentes, dans laquelle lesdits premier et second éléments de support (53, 54) sont horizontaux.

7. Motocyclette électrique selon l'une quelconque des revendications précédentes, dans laquelle ledit premier boîtier (11) comprend une première coque (13) et le second boîtier (21) comprend une seconde coque (23), ladite première batterie (10) étant positionnée dans ladite première coque (13) et ladite seconde batterie (20) étant positionnée dans ladite seconde coque (23).

8. Motocyclette électrique selon l'une quelconque des revendications précédentes, dans laquelle ladite première coque (13) est jointe audit premier élément structurel (12) et ladite seconde coque (23) est jointe audit second élément structurel (22).

9. Motocyclette électrique selon la revendication 8, dans laquelle la première coque (13) et la seconde coque (23) sont jointes, respectivement, au premier élément structurel (12) et au second élément structurel (22) par soudage ou collage.

10. Motocyclette électrique selon l'une quelconque des revendications précédentes, dans laquelle le cadre (50) comprend une structure en treillis.

11. Motocyclette électrique selon l'une quelconque des revendications précédentes, dans laquelle ledit premier boîtier (11) délimite avec ledit cadre (50) un premier espace (41) et ledit second boîtier (21) délimite avec ledit cadre (50) un second espace (42), ladite motocyclette électrique comprenant un conduit (40) pour le passage de l'air de refroidissement, ledit conduit de passage (40) comprenant lesdits premier et second espaces (41, 42).

12. Motocyclette électrique selon l'une quelconque des revendications précédentes, dans laquelle ladite première batterie (10) et ladite seconde batterie (20) sont symétriques par rapport audit cadre (50).

13. Motocyclette électrique selon l'une quelconque des revendications précédentes, dans laquelle ledit premier boîtier (11) et ledit second boîtier (21) sont symétriques par rapport audit cadre (50).
